# EUROPÄISCHE PATENTSCHRIFT

(11) **EP 1 593 859 B1**
(45) Veröffentlichungstag und Bekanntmachung des Hinweises auf die Patenterteilung: **04.03.2009**
(21) Anmeldenummer: 05008593.5
(22) Anmeldetag: 20.04.2005
(51) Int. Cl.: F16B 5/02

(54) **Verbindungselement zur lösbaren und schwingungsdämpfenden Verbindung eines ersten Bauteils mit einem zweiten Bauteil**
Fastening element for the releasable and anti-vibrating connection of a first element with a second element
Élément de fixation pour le raccordement libérables et anti-vibrant d'un premier élément avec un deuxième élément

(30) Priorität: 08.05.2004 DE 102004022809
(43) Veröffentlichungstag der Anmeldung: 09.11.2005
(73) Patentinhaber: Airbus Deutschland GmbH, 21129 Hamburg (DE)
(72) Erfinder: Röpke, Stephan, Dipl.-Ing., 23966 Wismar (DE); Horst, Markus, Dipl.-Ing., 23843 Oldesloe (DE)
(74) Vertreter: Schiemann, Siegfried

(56) Entgegenhaltungen:
- DE-A1- 10 057 947
- DE-U1- 20 218 301

## Beschreibung

Die Erfindung betrifft ein Verbindungselement zur lösbaren und schwingungsdampfenden Verbindung eines ersten Bauteils mit einem zweiten Bauteil und der Möglichkeit eines Toleranzausgleichs zwischen dem ersten und dem zweiten Bauteil in einer Ausgleichsrichtung mit einem im ersten Bauteil befestigbaren Dämpfungsring und mit einer Innenhülse und einem Federelement mit einem Federelementlangloch, wobei ein Haltebolzen zwischen zwei Federflächen des Federelements im Wesentlichen parallel zu einer Rastrichtung einrastbar ist.

Lösbare Verbindungselemente zur Verbindung von Bauteilen finden in der Technik weit verbreitete Anwendung. Sie werden beispielsweise im Automobilbau oder im Flugzeugbau zur Verbindung von Innenverkleidungsteilen mit äußeren Tragstrukturen der Karosserie bzw. der Rumpfzelle eingesetzt.

Aus der DE 200 16 889 U1 ist eine in zwei Raumrichtungen justierbare Platteneinheit für lösbare Federclipse zur Befestigung von Wandverkleidungselementen oder dergleichen bekannt. Die aus der DE 200 16 889 U1 vorbekannten Verbindungselemente weisen jeweils ein Federelement auf, in das entweder ein Langloch oder eine zylindrische Bohrung eingebracht ist. Durch das Langloch ist ein Toleranzausgleich zwischen den zu verbindenden Bauteilen möglich, wohingegen mit der zylindrischen Bohrung kein Toleranzausgleich möglich ist.

Aus der DE- 202 18 301- U1- ist eine Schwingungsdämpferring-Einsatzanordnung bekannt. Die Einsatzanordnung umfasst in einer Ausführungsvariante eine im Wesentlichen hohlzylindrisch ausgebildete Hülse, die von einem elastischen Schwingungsdämpferring umgeben und fest mit diesem verbunden ist. Der Schwingungsdämpferring ist wiederum von einem Hohlzylinder umgeben, der mittels eines Sicherungsrings in einer Bauteilbohrung in einem ersten Bauteil aufgenommen ist. Zur Verbindung des ersten Bauteils mit einem zweiten Bauteil weist ein unterer Basisteil eine Haltefederanordnung mit vier Haltefederarmen auf. Durch die Einsatzanordnung ist ein Bolzen führbar, der mit der Haltefederanordnung verrastbar ist.

Die DE 100 57 947- A1 betrifft eine Verbindungsanordnung zum lösbaren Verbinden eines ersten Bauteils mit einem zweiten Bauteil mit einem hülsengeführten Bolzen, der mit einem ringförmigen Entriegelungsteil fest verbunden ist. Ein Schwingungsdämpferring aus einem elastischen Material ist mittels einer umlaufenden Nut in eine Befestigungsbohrung in dem zweiten Bauteil einsetzbar. Der Schwingungsdämpferring weist eine in etwa hohlzylindrisch ausgestaltete Klemmhalterung auf, deren unteres Ende umgebördelt ist. Das erste Bauteil weist ebenfalls eine Befestigungsbohrung auf, in der eine im Wesentlichen hohlzylindrisch ausgebildete Hülse angeordnet ist. Die Befestigung der Hülse erfolgt mit einem Sicherungsring. In der Hülse ist ein axial verschiebbarer Bolzen federnd aufgenommen. Die Verbindung der beiden Bauteile erfolgt durch eine im unteren Abschnitt des Bolzens eingebrachte ringförmige Ausnehmung, in die die Eingriffsbereiche von Blattfederarmen einrasten. Mittels eines an einem unteren Ende des Bolzens angeordneten Entriegelungsteils lassen sich die Blattfederarme zur Entriegelung der Verbindung aufspreizen, wenn der Bolzen axial nach unten bewegt wird.

Die Fertigung der vorbekannten Verbindungselemente gestaltet sich jedoch aufwändig, weil zwei unterschiedliche Stanzwerkzeuge für die Einbringung des Langlochs oder die Einbringung der zylindrischen Bohrung in das metallische Federelement vorgehalten und eingesetzt werden müssen. Zudem erhöht sich der Lagerhaltungsaufwand, weil zwei Varianten des kompletten Verbindungselements für Verbindungsaufgaben mit oder ohne Toleranzausgleich vorgehalten werden müssen.

Aufgabe der Erfindung ist es, insbesondere den Fertigungsaufwand der Verbindungselemente durch eine Vereinfachung des Herstellungsprozesses zur verringern.

Dadurch, dass die Innenhülse einen Einsatz aufweist und das Federelement mit einer Sicherungsplatte verbunden ist und ein oberer Kragen der Innenhülse zwischen einer Grundplatte des Federelements und der Sicherungsplatte angeordnet ist,
kann das erfindungsgemäße Verbindungselement auf einfache Art und Weise durch die Variation nur eines einfachen Bestandteils in Form der in die Innenhülse einzubringenden Einsätze sowohl für Verbindungen ohne Toleranzausgleich als auch für Verbindungen mit Toleranzausgleich ausgebildet werden. Erfindungsgemäß ist es nur noch erförderlich, ein Langloch in das Federelement einzubringen. Die Möglichkeit eines Toleranzausgleichs mittels des Verbindungselements wird erfindungsgemäß einfach durch unterschiedliche Varianten des Einsatzes in der Innenhülse geschaffen, wobei der Einsatz in einer Variante eine zylindrische Bohrung und in einer zweiten Variante ein Langloch aufweist.
Erfolgt das Einbringen der unterschiedlichen Einsätze in das Verbindungselement erst vor dessen Einbau und nicht schon bei dessen Herstellung, kann zudem die Anzahl der vorzuhaltenden komplexen Teile und damit der Lagerhaltungsaufwand verringert werden, weil nur ein Grundtyp des Verbindungsmittels vorgehalten werden muss, der erst durch den Einbau einer der beiden Einsatzvarianten entweder für Verbindüngsaufgaben ohne die Möglichkeit eines Toleranzausgleichs oder für solche mit der Möglichkeit eines Toleranzausgleichs ausgebildet wird.

Eine vorteilhafte Ausgestaltung der Erfindung sieht vor, dass in den Einsatz eine Bohrung zur Ermöglichung einer Verbindung ohne Toleranzausgleich eingebracht ist.
Hierdurch kann ein Verbindungselement auf einfache Art und Weise durch die Verwendung eines Einsatzes mit einer insbesondere zylindrischen Bohrung für die Verbindung von Bauteilen ohne die Möglichkeit eines Toleranzausgleichs ausgebildet werden. Es ist hierzu nicht mehr erforderlich, in das Federelement anstatt des Langlochs eine zylindrische Bohrung einzubringen.

Nach Maßgabe einer weiteren vorteilhaften Ausgestaltung der Erfindung ist in den Einsatz ein Langloch zur Ermöglichung einer Verbindung mit Toleranzausgleich eingebracht.
Hierdurch kann das Verbindungselement entsprechend auf einfache Art und Weise für eine Verbindung von Bauteilen mit der Möglichkeit eines Toleranzausgleichs ausgebildet werden.

Gemäß einer weiteren Ausführungsvariante ist der Einsatz mit einem Kunststoffmaterial gebildet.
Diese Ausgestaltung ermöglicht eine besonders einfache Fertigung des Verbindungselements, da sich Kunststoffmaterialien leichter als metallische Materialien verarbeiten lassen. Zudem lassen sich mit einem Kunststoffmaterial gefertigte Einsätze leicht in der Innenhülse des Verbindungselements, beispielsweise durch Einkleben, Einpressen, Einklemmen oder dergleichen, befestigen.

Nach Maßgabe einer weiteren vorteilhaften Ausgestaltung ist der Einsatz fest mit der Innenhülse verbunden, insbesondere in diese eingeklebt, einvulkanisiert, eingepresst oder eingeklemmt.
Wird der Einsatz in die Innenhülse insbesondere durch Einpressen oder Einklemmen im Wesentlichen unlösbar befestigt, so kann das Verbindungselement unmittelbar vor der Anwendung von einem Benutzer auf einfache Art und Weise durch Einsetzen eines Einsatzes mit einer Bohrung oder eines Einsatzes mit einem Langloch entweder für Verbindungen ohne Toleranzausgleich oder für Verbindungen mit Toleranzausgleich ausgebildet werden.
Zu diesem Zweck kann der Einsatz geeignete Verbindungsmittel zur im Wesentlichen unlösbaren Verbindung mit der Innenhülse aufweisen.

Weitere vorteilhafte Ausgestaltungen des Verbindungselements sind in den weiteren Patentansprüchen dargelegt.

In der Zeichnung zeigt:
- **Fig. 1**: Eine schematische Seitenansicht eines Verbindungselementes,
- **Fig. 2**: einen Schnitt durch das Verbindungselement,
- **Fig. 3**: eine Draufsicht auf das Verbindungselement mit teilweise weggebrochenem Federelement und
- **Fig. 4**: einen Schnitt durch ein montiertes Verbindungselement.

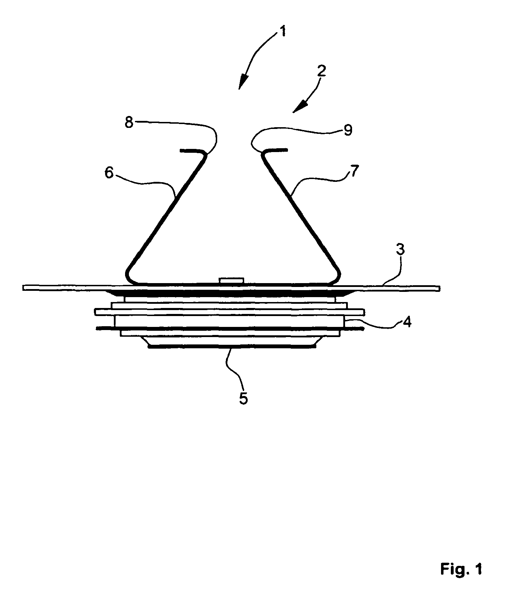

Die **Fig. 1** zeigt eine schematische Seitenansicht des erfindungsgemäßen Verbindungselementes. In der Zeichnung weisen gleiche konstruktive Elemente jeweils dieselben Bezugsziffern auf.

Ein Verbindungselement 1 umfasst unter anderem ein Federelement 2, eine Sicherungsplatte 3 sowie einen Dämpfungsring 4 zur Schwingungsdämpfung bzw. zur Entkopplung der zu verbindenden Bauteile. Innerhalb des Dämpfungsringes 4 ist eine Innenhülse 5 angeordnet. Das Federelement 2 weist eine erste und eine zweite Federfläche 6,7 auf. Das Federelement 2 ist aus einem federelastischen Material, beispielsweise Federstahl, geeigneten Kunststoffmaterialien oder dergleichen gebildet. Weiterhin weist die erste Federfläche 6 eine erste Rastnase 8 auf. Entsprechend ist die zweite Federfläche 7 mit einer zweiten Rastnase 9 versehen. Die erste und die zweite Rastnase 8,9 dienen dazu, in eine korrespondierend zu den Rastnasen 8,9 ausgebildete, beidseitige Vertiefung eines in der Darstellung der Fig. 1 nicht dargestellten Haltebolzens lösbar einzurasten.

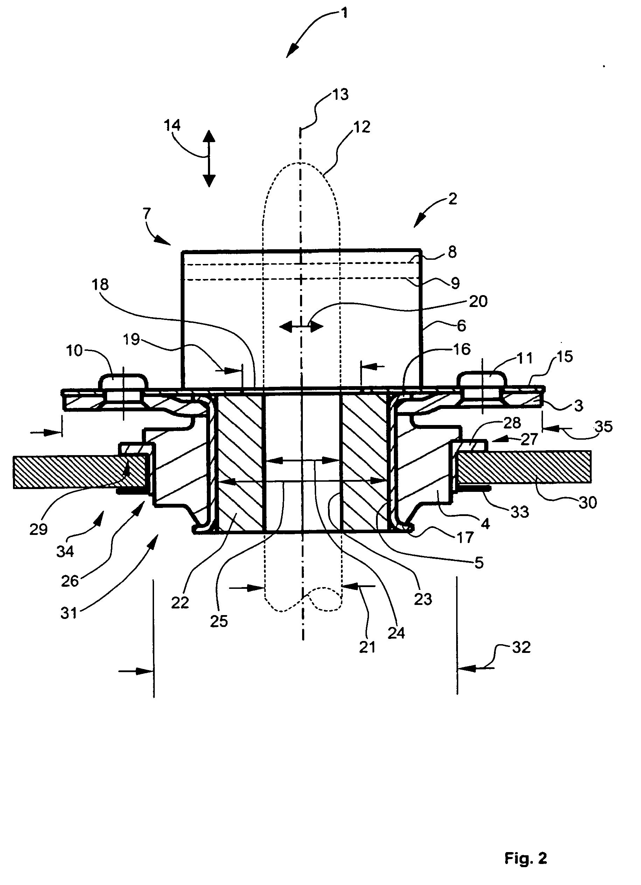

Die **Fig. 2** zeigt einen detaillierten Schnitt durch das erfindungsgemäße Verbindungselement 1 ohne die Möglichkeit des Toleranzausgleichs. Das Federelement 2 umfasst die erste Federfläche 6 sowie die in der Darstellung der Fig. 2 nicht sichtbare zweite Federfläche 7, die hinter der ersten Federfläche 6 angeordnet ist. Vom Federelement 2 ausgehende Kräfte werden von der Innenhülse 5 und der Sicherungsplatte 3 auf den Dämpfungsring 4 übertragen.
Das Federelement 2 ist auf der Sicherungsplatte 3 durch die Niete 10,11 befestigt. Alternativ ist auch eine Befestigung durch Punktschweißen, Verkleben etc. möglich.

Zwischen den Federflächen 6,7 ist ein Haltebolzen 12 mit einer Hochachse 13 - angedeutet durch eine gestrichelte Umrissdarstellung - im Bedarfsfall mittels eines nicht dargestellten Betätigungselements lösbar eingerastet. Das Einrasten des Haltebolzen 12 zwischen den Federflächen 6,7 erfolgt hierbei parallel zu einer Rastrichtung 14. Die Fig. 2 zeigt den Haltebolzen 12 im eingerasteten Zustand. Der Haltebolzen 12 stellt im eingerasteten Zustand eine kraftschlüssige Verbindung des Verbindungselements 1 zu einem in der Fig. 2 der Übersicht halber nicht näher dargestellten zweiten Bauteil her. Damit der Haltebolzen 12 zwischen den Federflächen 6,7 einrasten kann, weist der Haltebolzen 12 beidseitig im Endbereich korrespondierend zu den Rastnasen 8,9 ausgebildete Vertiefungen auf, in die die Rastnasen 8,9 zumindest bereichsweise formschlüssig einbringbar sind. Die Vertiefungen sind in der Darstellung der Fig. 2 der besseren Übersichtlichkeit halber ebenfalls nicht dargestellt.

Zwischen der Sicherungsplatte 3 und einer Grundplatte 15 des Federelements 2 ist ein oberer Kragen 16 der Innenhülse 5 mechanisch fest eingespannt bzw. eingeklemmt. Die feste Einspannung des oberen Kragens 16 resultiert daraus, dass das Federelement 2 mit der Sicherungsplatte 3 fest verbunden, insbesondere aufgenietet, verschweißt, verpresst, verklemmt oder anderweitig befestigt ist.
Die Innenhülse 5 ist vorzugsweise allseitig von dem Dämpfungsring 4 umgeben. Der Dämpfungsring 4 ist mit einem schwingungsdämpfenden Material, beispielsweise mit Gummi, Silikon, Kunststoff oder dergleichen, gebildet. Der Dämpfungsring 4 ist ebenfalls fest mit der Innenhülse 5 verbunden, insbesondere auf diese aufgeklebt, aufvulkanisiert, aufgepresst, aufgeklemmt oder anderweitig befestigt. Die Innenhülse 5 ist vorzugsweise mit einem metallischen Material gebildet, kann aber alternativ auch mit einem Kunststoffmaterial gefertigt werden. Die Innenhülse 5 weist weiterhin einen unteren Kragen 17 zur sicheren beidseitigen Einfassung des Dämpfungsrings 4 auf.

In das Federelement 2 bzw. die Grundplatte 15 ist unabhängig vom Erfordernis bzw. der Möglichkeit eines Toleranzausgleichs durch das erfindungsgemäße Verbindungselement 1 stets ein Federelementlangloch 18 zur Durchführung des Haltebolzens 12 eingebracht. Das Federelementlangloch 18 weist hierbei eine Länge 19 auf, die eine ausreichende Verschiebbarkeit des Haltebolzens 12 zwischen den Federflächen 6,7 in einer Ausgleichsrichtung 20 gewährleistet, falls die Möglichkeit eines Toleranzausgleichs gewünscht ist. Eine in der Fig. 2 nicht darstellbare und daher nicht mit einer Bezugsziffer versehene Breite des Federelementlanglochs 18, die sich senkrecht zur Zeichenebene erstreckt, ist vorzugsweise so gewählt, dass die Breite des Federelementlanglochs 18 ungefähr einem Außendurchmesser 21 des Haltebolzens 12 entspricht, um ein Verklemmen zu vermeiden.

Innerhalb der Innenhülse 5 ist erfindungsgemäß ein Einsatz 22 vorzugsweise unlösbar angeordnet.

Der Einsatz 22 kann in die Innenhülse 5 eingeklebt, einvulkanisiert, eingepresst, eingeklemmt oder auf andere Art und Weise in dieser befestigt werden. Der Einsatz 22 ist vorzugsweise mit einem Kunststoffmaterial gebildet. Der Einsatz 22 weist in der Darstellung der Fig. 2 eine Bohrung 23 auf, deren Bohrungsdurchmesser 24 im Wesentlichen dem Außendurchmesser 21 des Haltebolzens 12 entspricht, so dass der Haltebolzen 12 vorzugsweise ohne oder mit einem nur geringen mechanischen Spiel durch den Einsatz 22 zur Verbindung der Bauteile hindurch geführt werden kann. Die Wandstärke des Einsatzes 22 entspricht in etwa einem Innenhülsendurchmesser 25 abzüglich des Bohrungsdurchmessers 24.

Damit weist die in der Fig. 2 gezeigte Ausführungsvariante des Verbindungselements 1 nicht die Möglichkeit eines Toleranzausgleichs in der Ausgleichsrichtung 20 auf, weil der Haltebolzen 12 praktisch ohne mechanisches Spiel im Einsatz 22 aufgenommen ist und somit nur parallel zur Hochachse 13 verschiebbar ist.

Soll das Verbindungselement 1 dagegen über die Möglichkeit eines Toleranzausgleichs in der Ausgleichsrichtung 20 verfügen, so wird lediglich die Bohrung 23 im Einsatz 22 als Langloch ausgebildet, bzw. es wird ein gleichartiger Einsatz mit einem Langloch in die Innenhülse 5 eingesetzt. Alle übrigen Komponenten des Verbindungselements 1 bleiben konstruktiv unverändert.

Somit kann das erfindungsgemäße Verbindungselement 1 entweder schon bei der Herstellung oder auch erst unmittelbar vor dem Einbau durch die alternative Verwendung eines Einsatzes mit einem Langloch oder eines Einsatzes mit einer zylindrischen Bohrung mit der Möglichkeit eines Toleranzausgleichs oder ohne die Möglichkeit eines Toleranzausgleichs ausgestattet werden.
Der Einsatz 22 kann zu diesem Zweck auf seiner Außenfläche beispielsweise Vorsprünge aufweisen, die in entsprechende Vertiefungen einer Innenfläche der Innenhülse 5 einpressbar sind, um eine im Wesentlichen unlösbare Verbindung des Einsatzes 22 mit der Innenhülse 5 zu schaffen. Die feste Verbindung des Einsatzes 22 mit der Innenhülse 5 kann auch durch andere Verbindungstechniken, beispielsweise durch Verrasten, Verschrauben, Verkleben oder dergleichen, erfolgen.
Somit kann ein Anwender unmittelbar vor dem Verbau des erfindungsgemäßen Verbindungselements 1 durch Einsetzen des entsprechenden Einsatzes 22 mit einer zylindrischen Bohrung oder mit einem Langloch das Verbindungselement 1 für Verbindungsaufgaben ohne das Erfordernis eines Toleranzausgleichs oder mit dem Erfordernis eines Toleranzausgleichs ausbilden.
Alternativ können auch komplette, vollständige Verbindungselemente gefertigt werden, die schon mit Einsätzen für Verbindungsaufgaben ohne das Erfordernis eines Toleranzausgleichs als auch für solche mit dem Erfordernis eines Toleranzausgleichs versehen sind, wodurch sich allerdings der Lagerhaltungsaufwand geringfügig erhöht.
Insbesondere während des Herstellungsprozesses der Verbindungselemente können die Einsätze 22 hierbei in bekannter Weise, beispielsweise durch Einkleben, Einvulkanisieren oder dergleichen, unlösbar in den Innenhülsen befestigt werden.
Der erfindungsgemäße Einsatz 22 vermindert darüber hinaus Geräuschentwicklungen bzw. verhindert weitgehend die Entstehung von Klappergeräuschen, die durch Bewegungen des Haltebolzens 12 innerhalb der Innenhülse 5 bzw. in dem Federelement 2 entstehen können, wenn kein Einsatz 22 in der Innenhülse 5 vorhanden ist.

In den Dämpfungsring 4 ist eine umlaufende Ausnehmung 26 bzw. ein Rezess eingebracht, der im Wesentlichen zur Befestigung des Verbindungselements 1 im Bauteil dient. In der umlaufenden Ausnehmung 26 ist eine Außenhülse 27 angeordnet, wobei die Außenhülse 27 fest mit der Ausnehmung 26, beispielsweise durch Verkleben, Vulkanisieren, Verpressen, Verklemmen oder dergleichen verbunden ist. Die Außenhülse 27 ist ebenfalls mit einem metallischen Material gebildet, kann aber alternativ auch mit einem Kunststoffmaterial gefertigt sein. Die Außenhülse 27 weist einen umlaufenden Haltekragen 28 auf. Der Haltekragen 28 dient zur Schaffung einer Anlagefläche 29, mittels derer Kräfte vom Verbindungselement 1 auf ein erstes Bauteil 30 übertragen werden. In das erste Bauteil 30 ist eine Befestigungsbohrung 31 mit einem Befestigungsbohrungsdurchmesser 32 zur Befestigung des Verbindungselements 1 eingebracht. Hierzu ist die Außenhülse 27 innerhalb der Befestigungsbohrung 31 angeordnet bzw. eingesetzt. Mittels eines umlaufenden Sicherungsringes 33 wird die Außenhülse 27 und damit das gesamte Verbindungselement 1 innerhalb der Befestigungsbohrung 31 des ersten Bauteils 30 gesichert. Der Sicherungsring 33 kann nach dessen Aufbringung auf die Außenhülse 27 nicht mehr ohne weiteres von dieser entfernt werden, weil sich dieser mit der Außenhülse 27 verklemmt. Damit ist das Verbindungselement 1 in einem Randbereich 34 der Befestigungsbohrung 31 im Normalfall unlösbar gesichert und fest mit dem ersten Bauteil 30 verbunden.

Ein Außendurchmesser 35 der Sicherungsplatte 3 ist vorzugsweise so gewählt, dass das Verbindungselement 1 bei einem etwaigen Versagen, das heißt zum Beispiel bei einem Bruch oder einem Reißen des Dämpfungsringes 4 nicht durch die Befestigungsbohrung 31 hindurch gezogen wird.

Der Vorteil des erfindungsgemäßen Verbindungselements 1 liegt insbesondere darin, dass lediglich der Einsatz 22 durch die alternative Einbringung einer zylindrischen Bohrung oder eines Langloches variiert werden muss, um ein Verbindungselement 1 ohne bzw. mit Toleranzausgleichsmöglichkeit zu schaffen, während die übrigen Komponenten unverändert bleiben können. Da der Einsatz 22 vorzugsweise mit einem Kunststoffmaterial gebildet ist, lässt sich sowohl die zylindrische Bohrung 23 als auch alternativ ein Langloch sehr leicht in diesen einbringen, wodurch sich der Fertigungsaufwand beträchtlich vermindert.

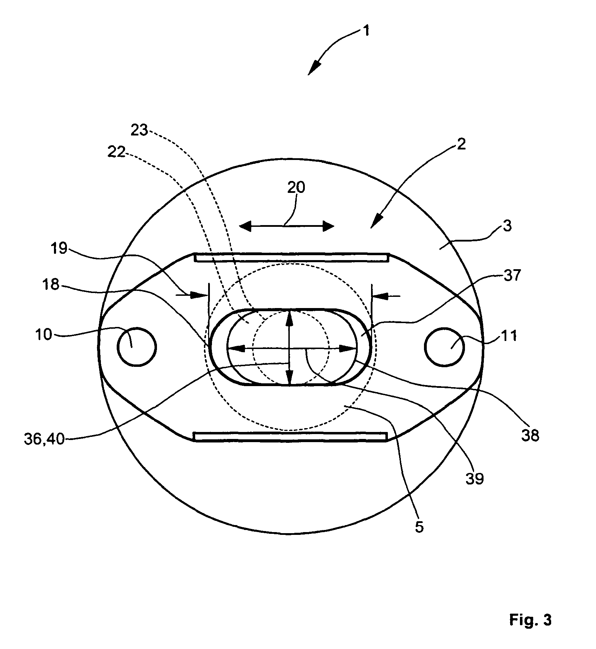

Die **Fig. 3** zeigt das erfindungsgemäße Verbindungselement 1 mit der Möglichkeit eines Toleranzausgleichs durch einen anderen Einsatz in einer Draufsicht, wobei die Federflächen 6,7 der besseren Übersicht halber weggebrochen sind. Die Niete 10,11 verbinden die Sicherungsplatte 3 mit dem Federelement 2.

Das Federelement 2 weist das Federelementlangloch 18 mit der Länge 19 und einer Breite 36 auf. In die gestrichelt dargestellte Innenhülse 5 ist in Abweichung zur Darstellung in der Fig. 2 ein anderer Einsatz 37 eingesetzt, in den im Unterschied zum Einsatz 22 nach Maßgabe der Fig. 2 ein Langloch 38 eingebracht ist. Nur zu Vergleichszwecken ist die räumliche Erstreckung des Einsatzes 22 mit der Bohrung 23 gestrichelt dargestellt (vgl. Fig. 2). Das Langloch 38 weist wegen der besseren zeichnerischen Darstellbarkeit eine kleinere Länge 39 als die Länge 19 des Federelementlanglochs 18 auf. Eine Breite 40 des Langlochs 38 im Einsatz 37 entspricht im gezeigten Ausführungsbeispiel in etwa der Breite 36 des Federelementlanglochs 18.

In einer bevorzugten Ausführungsvariante des erfindungsgemäßen Verbindungselements 1 sind das Federelementlangloch 18 und das Langloch 38 im Einsatz 37 im Wesentlichen kongruent ausgebildet, wobei die Länge 19 des Federelementlanglochs 18 und die Länge 39 des Langlochs 38 so gewählt sind, dass der Einsatz 37 eine noch ausreichende minimale Wandstärke aufweist. Die minimale Wandstärke des Einsatzes 37 ergibt sich hierbei aus der Differenz des Innenhülsendurchmessers 25 und der Länge 39 des Langlochs 38 im Einsatz 37. Die minimale Wandstärke des Einsatzes 37 sollte bevorzugt einen Wert von ungefähr 0,3 mm nicht unterschreiten, um noch eine ausreichende mechanische Stabilität des Einsatzes 37 zu gewährleisten.
Entsprechende Überlegungen gelten auch für eine minimale Wandstärke der Ausführungsvariante mit einem Einsatz 22 mit einer zylindrischen Bohrung 23.

Die Länge 19 des Federelementlanglochs 18 und die Länge 39 des Langlochs 38 im Einsatz 37 werden darüber hinaus so dimensioniert, dass ein für alle Last- und Betriebszustände des Verbindungselements 1 ausreichender Toleranzausgleich zwischen den zu verbindenden Bauteilen in der Ausgleichsrichtung 20 möglich ist. Die Breite 36 des Federelementlanglochs 18 sowie die Breite 40 des Langlochs 38 im Einsatz 37 werden hierbei bevorzugt so gewählt, dass der Haltebolzen 12 bei einer Montage mit leichtem mechanischen Spiel durch das Federelementlangloch 18 sowie das Langloch 38 im Einsatz 37 ohne die Gefahr des Verklemmens geführt werden kann.

Alternativ können sowohl das Federelementlangloch 18 als auch das Langloch 38 im Einsatz 37 jeweils eine unterschiedliche Länge 19,39 und/oder eine unterschiedliche Breite 36,40 aufweisen.

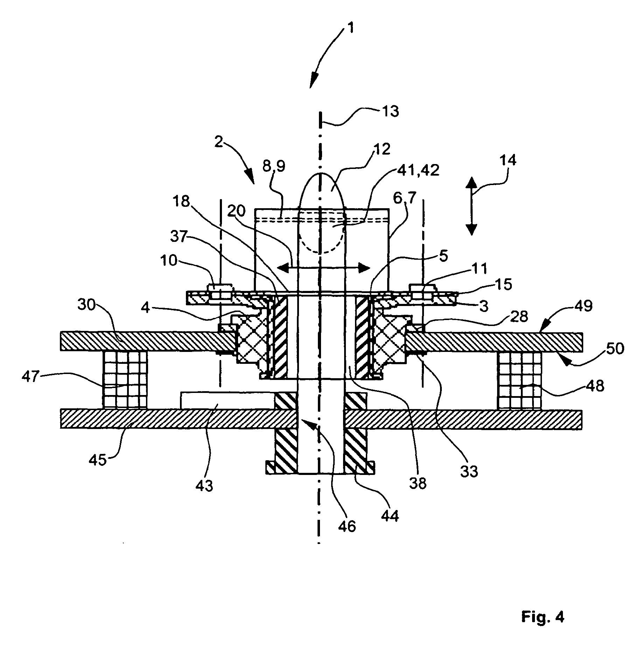

Die **Fig. 4** zeigt einen Schnitt durch ein montiertes Verbindungselement 1 mit Toleranzausgleich zwischen den Bauteilen.
Das Verbindungselement 1 ist, wie im Rahmen der Beschreibung der Fig. 2 bereits näher erläutert wurde, unter anderem durch den Dämpfungsring 4 innerhalb des ersten Bauteils 30 befestigt. Das Federelement 2 weist wiederum das Federelementlangloch 18 auf. Die Grundplatte 15 des Federelements 2 ist mittels der Niete 10,11 mit der Sicherungsplatte 3 verbunden.

Der Haltebolzen 12 weist beidseitige, an jeweils gegenüberliegenden Seiten angeordnete Ausnehmungen 41,42 auf, in die die Rastnasen 8,9 des Federelements 2 beidseitig in Richtung der Rastrichtung 14 einrasten bzw. zumindest bereichsweise formschlüssig anliegen. Mittels eines Betätigungshebels 43 ist der Haltebolzen 12 um die Hochachse 13 verschwenkbar und damit im Bedarfsfall aus dem Federelement 2 durch Aufspreizung der Federflächen 6,7 wieder ausrastbar. Der Haltebolzen 12 weist am unteren Ende ein Kopfteil 44 auf, das sich auf einem zweiten Bauteil 45 abstützt bzw. in diesem verschwenkbar aufgenommen ist und zur Kraftüberleitung dient. Zur Durchführung des Haltebolzens 12 ist in das zweite Bauteil 45 eine Bohrung 46 mit einem Durchmesser eingebracht, der eine leichte Verschwenkbarkeit des Haltebolzens 12 erlaubt.

In der Innenhülse 5 ist in Entsprechung zur Darstellung der Fig. 3 der Einsatz 37 angeordnet, in den das Langloch 38 eingebracht ist. Im übrigen gleicht der konstruktive Aufbau der im Rahmen der Fig. 2 beschriebenen Ausgestaltung des Verbindungselements 1. Aufgrund des Langlochs 38 im Einsatz 37 sind das erste und das zweite Bauteil 30,45 in der Ausgleichsrichtung 20 relativ zueinander verschiebbar. Ist kein Toleranzausgleich in der Ausgleichsrichtung 20 gewünscht, so wird anstatt des Einsatzes 37 der Einsatz 22 (vgl. Fig. 2) in die Innenhülse 5 eingesetzt, der die zylindrische Bohrung 23 aufweist.

Weiterhin sind zwischen dem ersten Bauteil 30 und dem zweiten Bauteil 45 mindestens zwei Puffer 47,48 angeordnet, um eine definierte Vorspannung zwischen den Bauteilen 30,45 zu gewährleisten und somit etwaige Klappergeräusche infolge von Relativbewegungen zwischen den Bauteilen 30,45 möglichst zu verhindern. Alternativ kann auch ein zentrischer, den Haltebolzen 12 zumindest teilweise umschließender Puffer vorgesehen sein. Die Puffer 47,48 bzw. der zentrische Puffer sind vorzugsweise mit einem elastischen Material, beispielsweise Kunststoff, Kautschuk, Gummi oder dergleichen gebildet. Der Haltebolzen 12 ist mit einem metallischen Material, einem Kunststoffmaterial oder dergleichen gebildet.

Zur Befestigung des Verbindungselements 1 innerhalb des ersten Bauteils 30 kann in Entsprechung zur Funktion der Puffer 47,48 zwischen dem Haltekragen 28 und einer Bauteiloberseite 49 des ersten Bauteils 30 bzw. zwischen einer Bauteilunterseite 50 des ersten Bauteils 30 und dem Sicherungsring 33 zusätzlich ein, in der Fig. 4 nicht näher dargestellter Ring aus einem elastischen Material oder dergleichen, zur Herstellung einer definierten Vorspannung zwischen dem Haltekragen 28 und dem ersten Bauteil 30, eingebracht werden.

Das erfindungsgemäße Verbindungselement ist insbesondere dazu vorgesehen, Plattenelemente für Innenverkleidungen von Verkehrsmitteln, insbesondere von Luftfahrzeugen, im Bedarfsfall leicht lösbar mit einer Unterkonstruktion, die zur Befestigung der Innenverkleidung an der Rumpfzellenstruktur dient, zu verbinden.

### Bezugszeichenliste

- 1: Verbindungselement
- 2: Federelement
- 3: Sicherungsplatte
- 4: Dämpfungsring
- 5: Innenhülse
- 6: erste Federfläche
- 7: zweite Federfläche
- 8: erste Rastnase
- 9: zweite Rastnase
- 10: Niet
- 11: Niet
- 12: Haltebolzen
- 13: Hochachse
- 14: Rastrichtung
- 15: Grundplatte
- 16: oberer Kragen
- 17: unterer Kragen
- 18: Federelementlangloch
- 19: Länge (Federelementlangloch)
- 20: Ausgleichsrichtung
- 21: Außendurchmesser (Haltebolzen)
- 22: Einsatz
- 23: Bohrung
- 24: Bohrungsdurchmesser
- 25: Innenhülsendurchmesser
- 26: Ausnehmung
- 27: Außenhülse
- 28: Haltekragen
- 29: Anlagefläche
- 30: erstes Bauteil
- 31: Befestigungsbohrung
- 32: Befestigungsbohrungsdurchmesser
- 33: Sicherungsring
- 34: Randbereich
- 35: Außendurchmesser (Sicherungsplatte)
- 36: Breite (Federelementlangloch)
- 37: Einsatz
- 38: Langloch
- 39: Länge
- 40: Breite
- 41: Ausnehmung
- 42: Ausnehmung
- 43: Betätigungshebel
- 44: Kopfteil
- 45: zweites Bauteil
- 46: Bohrung
- 47: Puffer
- 48: Puffer
- 49: Bauteiloberseite
- 50: Bauteilunterseite

## Patentansprüche

1. Verbindungselement (1) zur lösbaren und schwingungsdämpfenden Verbindung eines ersten Bauteils (30) mit einem zweiten Bauteil (45) und der Möglichkeit eines Toleranzausgleichs zwischen dem ersten und dem zweiten Bauteil (30,45) in einer Ausgleichsrichtung (20) mit einem im ersten Bauteil (30) befestigbaren Dämpfungsring (4) und mit einer Innenhülse (5) und einem Federelement (2) mit einem Federelementlangloch (18), wobei ein Haltebolzen (12) zwischen zwei Federflächen (6,7) des Federelements (2) im Wesentlichen parallel zu einer Rastrichtung (14) einrastbar ist, **dadurch gekennzeichnet, dass** die Innenhülse (5) einen Einsatz (22,37) aufweist und das Federelement (2) mit einer Sicherungsplatte (3) verbunden ist und ein oberer Kragen (16) der Innenhülse (5) zwischen einer Grundplatte (15) des Federelements (2) und der Sicherungsplatte (3) angeordnet ist

2. Verbindungselement (1) nach Anspruch 1, **dadurch gekennzeichnet, dass** in den Einsatz (22) eine Bohrung (23) zur Ermöglichung einer Verbindung ohne Toleranzausgleich eingebracht ist.

3. Verbindungselement (1) nach Anspruch 1, **dadurch gekennzeichnet, dass** in den Einsatz (37) ein Langloch (38) zur Ermöglichung einer Verbindung mit Toleranzausgleich eingebracht ist.

4. Verbindungselement (1) nach einem der Ansprüche 1 bis 3, **dadurch gekennzeichnet, dass** der Einsatz (22,37) mit einem Kunststoffmaterial gebildet ist.

5. Verbindungselement (1) nach einem der Ansprüche 1 bis 4, **dadurch gekennzeichnet, dass** der Einsatz (22,37) fest mit der Innenhülse (5) verbunden, insbesondere in diese eingeklebt, einvulkanisiert, eingepresst oder eingeklemmt, ist.

6. Verbindungselement (1) nach einem der Ansprüche 1 bis 5, **dadurch gekennzeichnet, dass** der Dämpfungsring (4) eine umlaufende, äußere Ausnehmung (26) aufweist, in der eine Außenhülse (27) mit einem Haltekragen (28) zur Schaffung einer Anlagefläche (29) für das Verbindungselement (1) in einem Randbereich (34) einer Befestigungsbohrung (31) innerhalb des ersten Bauteils (30) angeordnet ist und der Dämpfungsring (4) durch einen Sicherungsring (33) in der Befestigungsbohrung (31) haltbar ist.

7. Verbindungselement (1) nach einem der Ansprüche 1 bis 6, **dadurch gekennzeichnet, dass** das Federelement (2) mit einer ersten und einer zweiten Federfläche (6,7), die im Wesentlichen gegenüber parallel angeordnet sind, gebildet ist.

8. Verbindungselement (1) nach einem der Ansprüchen 1 bis 7, **dadurch gekennzeichnet, dass** die Innenhülse (5) eine im Wesentlichen kreisringförmige Querschnittsgeometrie mit einemwlnnenhülsendurchmesser (25) aufweist.

9. Verbindungselement (1) nach einem der Ansprüche 1 bis 8, **dadurch gekennzeichnet, dass** ein Außendurchmesser (35) der Sicherungsplatte (3) größer ist als ein Befestigungsbohrungsdurchmesser (32).

10. Verbindungselement (1) nach einem der Ansprüche 1 bis 9, **dadurch gekennzeichnet, dass** die erste und die zweite Federfläche (6,7) jeweils zueinander gerichtete erste und zweite Rastnasen (8,9) aufweisen, die in korrespondierende, beiderseitige Ausnehmungen (41,42) des Haltebolzens (12) rastbar einbringbar sind.

11. Verbindungselement (1) nach einem der Ansprüche 1 bis 10, **dadurch gekennzeichnet, dass** die Innenhülse (5) mit dem Dämpfungsring (4), insbesondere durch Einkleben, Einpressen, Einklemmen oder Einvulkanisieren, fest verbunden ist.

12. Verbindungselement (1) nach einem der Ansprüche 1 bis 11, **dadurch gekennzeichnet, dass** die Außenhülse (27) mit dem Dämpfungsring (4), insbesondere durch Verkleben, Verpressen, Verklemmen oder Vulkanisieren, fest verbunden ist.

13. Verbindungselement (1) nach einem der Ansprüche 1 bis 12, **dadurch gekennzeichnet, dass** das Federelement (2) mit der Sicherungsplatte (3) fest verbunden, insbesondere mit der Sicherungsplatte (3) vernietet, verschweißt oder verklebt, ist.

## Claims

1. Connecting element (1) for a releasable and a vibration damping connection of a first component (30) with a second component (45) and the possibility of a tolerance compensation between the first and the second components (30, 45) in a compensatory direction (20) with a damping ring (4), which can be fastened in the first component (30), and with an inner sleeve (5) and a spring element (2) with a spring element long hole (18), wherein a retaining bolt (12) is engageable between two spring faces (6, 7) of the spring element (2) essentially parallel to an engagement direction (14), **characterized in that** the inner sleeve (5) has an insert (22, 37) and the spring element (2) is connected with a locking plate (3) and an upper collar (16) of the inner sleeve (5) is arranged between a base plate (15) of the spring element (2) and the locking plate (3).

2. Connecting element (1) according to claim 1, **characterized in that** a bore (23) is placed in the insert (22) for a connection without compensatory tolerance.

3. Connecting element (1) according to claim 1, **characterized in that** a long hole (38) is placed in the insert (37) for a connection with compensatory tolerance.

4. Connecting element (1) according to one of the claims 1 to 3, **characterized in that** the insert (22, 37) is formed with a plastic material.

5. Connecting element (1) according to one of the claims 1 to 4, **characterized in that** the insert (22, 37) is firmly connected with the inner sleeve (5), especially bonded, vulcanized, force-fitted or clamped in the inner sleeve (5).

6. Connecting element (1) according to one of the claims 1 to 5, **characterized in that** the damping ring (4) has a circumferential outer recess (26), in which an outer sleeve (27) with a retaining collar (28) for creating a contact surface (29) for the connecting element (1) in a border area (34) of a fastening bore (31) is disposed within the first component (30) and the damping ring (4) is retainable in the fastening bore (31) by a safety ring (33).

7. Connecting element (1) according to one of the claims 1 to 6, **characterized in that** the spring element (2) is formed with a first and a second spring faces (6, 7), which are essentially disposed parallel opposite of each other.

8. Connecting element (1) according to one of the claims 1 to 7, **characterized in that** the inner sleeve (5) has an essentially circular cross-sectional geometry with an inner sleeve diameter (25).

9. Connecting element (1) according to one of the claims 1 to 8, **characterized in that** an outer diameter (35) of the locking plate (3) is larger than a fastening bore diameter (32).

10. Connecting element (1) according to one of the claims 1 to 9, **characterized in that** the first and the second spring face (6, 7) have respectively first and second latches (8, 9) that are directed towards each other, which can be engageably placed in corresponding, double-sided recesses (41, 42) of the retaining bolt (12).

11. Connecting element (1) according to one of the claims 1 to 10, **characterized in that** the inner sleeve (5) is firmly connected with the damping ring (5), especially by bonding, force-fitting, clamping, or vulcanizing.

12. Connecting element (1) according to one of the claims 1 to 11, **characterized in that** the outer sleeve (27) is firmly connected with the damping ring (4), especially by bonding, force-fitting, clamping, or vulcanizing.

13. Connecting element (1) according to one of the claims 1 to 12, **characterized in that** the spring element (2) is firmly connected with the locking plate (3), especially riveted, welded, or bonded with the locking plate (3).

## Revendications

1. Elément d'assemblage (1) pour l'assemblage amovible et amortisseur de vibrations d'un premier composant (30) avec un second composant (45) et pour permettre une compensation de tolérances entre le premier et le second composant (30, 45) dans une direction d'équilibrage (20), comprenant un anneau amortisseur (4) qui peut être fixé dans le premier composant (30), un manchon intérieur (5) et un élément à ressort (2) avec un trou oblong (18), un axe de retenue (12) pouvant être encliqueté entre deux surfaces de ressort (6, 7) de l'élément à ressort (2) de façon essentiellement parallèle à une direction d'encliquetage (14), **caractérisé en ce que** le manchon intérieur (5) présente un insert (22, 37), l'élément à ressort (2) est assemblé avec une plaque de blocage (3), et un collet supérieur (16) du manchon intérieur (5) est disposé entre une plaque de base (15) de l'élément à ressort (2) et la plaque de blocage (3).

2. Elément d'assemblage (1) suivant la revendication 1, **caractérisé en ce qu'**un alésage (23) est pratiqué dans l'insert (22) pour permettre un assemblage sans compensation de tolérances.

3. Elément d'assemblage (1) suivant la revendication 1, **caractérisé en ce qu'**un trou oblong (38) est pratiqué dans l'insert (37) pour permettre un assemblage avec compensation de tolérances.

4. Elément d'assemblage (1) suivant l'une des revendications 1 à 3, **caractérisé en ce que** l'insert (22, 37) est formé d'une matière plastique.

5. Elément d'assemblage (1) suivant l'une des revendications 1 à 4, **caractérisé en ce que** l'insert (22, 37) est assemblé fixement avec le manchon intérieur (5), est en particulier collé, vulcanisé, emmanché ou coincé dans ce dernier.

6. Elément d'assemblage (1) suivant l'une des revendications 1 à 5, **caractérisé en ce que** l'anneau amortisseur (4) présente un creux périphérique (26) extérieur, dans lequel est disposé un manchon extérieur (27) muni d'un collet de retenue (28) pour créer une surface d'appui (29) pour l'élément d'assemblage (1) dans une zone de bordure (34) d'un trou de fixation (31) à l'intérieur du premier composant (30) et l'anneau amortisseur (4) peut être maintenu par un circlip (33) dans le trou de fixation (31).

7. Elément d'assemblage (1) suivant l'une des revendications 1 à 6, **caractérisé en ce que** l'élément à ressort (2) est formé d'une première et d'une seconde surface de ressort (6, 7), qui sont disposées de façon essentiellement parallèle l'une par rapport à l'autre.

8. Elément d'assemblage (1) suivant l'une des revendications 1 à 7, **caractérisé en ce que** le manchon intérieur (5) présente une géométrie de section transversale essentiellement circulaire, avec un diamètre de manchon intérieur (25).

9. Elément d'assemblage (1) suivant l'une des revendications 1 à 8, **caractérisé en ce qu'**un diamètre extérieur (35) de la plaque de blocage (3) est plus grand qu'un diamètre (32) du trou de fixation.

10. Elément d'assemblage (1) suivant l'une des revendications 1 à 9, **caractérisé en ce que** la première et la seconde surface de ressort (6, 7) présente chacune des premier et des second ergots d'encliquetage (8, 9) dirigés l'un vers l'autre, lesquels ergots peuvent être amenés par encliquetage dans des creux correspondants (41, 42) bilatéraux de l'axe de retenue (12).

11. Elément d'assemblage (1) suivant l'une des revendications 1 à 10, **caractérisé en ce que** le manchon intérieur (5) est assemblé fixement avec l'anneau amortisseur (4), en particulier par collage, emmanchement, coinçage ou vulcanisation.

12. Elément d'assemblage (1) suivant l'une des revendications 1 à 11, **caractérisé en ce que** le manchon extérieur (27) est assemblé fixement avec l'anneau amortisseur (4), en particulier par collage, compression, coinçage ou vulcanisation.

13. Elément d'assemblage (1) suivant l'une des revendications 1 à 12, **caractérisé en ce que** l'élément à ressort (2) est assemblé fixement avec la plaque de blocage (3), en particulier riveté, soudé ou collé avec la plaque de blocage (3).
